# FASCICULE DE BREVET EUROPEEN

(11) **EP 2 678 804 B1**
(45) Date de publication et mention de la délivrance du brevet: **10.04.2024**
(21) Numéro de dépôt: 12708270.9
(22) Date de dépôt: 21.02.2012
(51) Int. Cl.: G06V 40/16

(54) **PROCÉDÉ DE DÉTECTION D'UN ENSEMBLE PRÉDÉFINI DE POINTS CARACTÉRISTIQUES D'UN VISAGE**
VERFAHREN ZUR ERKENNUNG EINER VORGEGEBENEN MENGE CHARAKTERISCHER PUNKTE EINES GESICHTS
METHOD FOR DETECTING A PREDEFINED SET OF CHARACTERISTIC POINTS OF A FACE

(30) Priorité: 22.02.2011 FR 1151424
(43) Date de publication de la demande: 01.01.2014
(73) Titulaire: Fittingbox, 31670 Labege (FR)
(72) Inventeur: CHOUKROUN, Ariel, F-31000 Toulouse (FR); LE GALLOU, Sylvain, F-31450 Baziege (FR)
(74) Mandataire: Ipside
(86) Numéro de dépôt international: PCT/EP2012/052958
(87) Numéro de publication internationale: WO 2012/113805

(56) Documents cités:
- WO-A1-2007/116208
- CUIPING ZHANG ET AL: "Component-Based Active Appearance Models for Face Modelling", 1 janvier 2005 (2005-01-01), ADVANCES IN BIOMETRICS LECTURE NOTES IN COMPUTER SCIENCE, LNCS, SPRINGER, BERLIN, DE, XP019026877, ISBN: 978-3-540-31111-9 pages 206-212, page 207, alinéa 2 - page 209, alinéa 4
- JINLI SUO ET AL: "Design sparse features for age estimation using hierarchical face model", 8TH IEEE INTERNATIONAL CONFERENCE ON AUTOMATIC FACE & GESTURE RECOGNITION, FG '08,, 17 septembre 2008 (2008-09-17), - 19 septembre 2008 (2008-09-19), pages 1-6, XP031448350, IEEE, PISCATAWAY, NJ, USA ISBN: 978-1-4244-2153-4
- Wenyi Zhao and Rama Chellappa (EDs.): "Face Processing ; Advanced Modeling and Methods", 2006, Elsevier, Amsterdam, XP002672400, pages 127-158, page 144
- FENG TANG ET AL: "Probabilistic Hierarchical Face Model for Feature Localization", APPLICATIONS OF COMPUTER VISION, 2007. WACV '07. IEEE WORKSHOP ON, IEEE, PI, 1 February 2007 (2007-02-01), pages 53-53, XP031055162, ISBN: 978-0-7695-2794-9
- ZIJIAN XU ET AL: "A Hierarchical Compositional Model for Face Representation and Sketching", IEEE TRANSACTIONS ON PATTERN ANALYSIS AND MACHINE INTELLIGENCE, IEEE COMPUTER SOCIETY, USA, vol. 30, no. 6, 1 June 2008 (2008-06-01), pages 955-969, XP011205570, ISSN: 0162-8828
- ZHANG LI ET AL: "Robust Face Alignment Based on Hierarchical Classifier Network", 2006, ADVANCES IN INTELLIGENT DATA ANALYSIS XIX; [LECTURE NOTES IN COMPUTER SCIENCE; LECT.NOTES COMPUTER], PAGE(S) 1 - 11, XP047530024, ISSN: 0302-9743 ISBN: 978-3-030-71592-2
- LIANG LIN ET AL: "Face Alignment Via Component-Based Discriminative Search", 12 October 2008 (2008-10-12), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 72 - 85, XP047448757, ISBN: 978-3-540-74549-5
- Liu Xiaoming: "Generic Face Alignment using Boosted Appearance Model", COMPUTER VISION AND PATTERN RECOGNITION, 2007. CVPR '07. IEEE CONFERENCE ON, 1 June 2007 (2007-06-01), pages 1-8, XP093004118, DOI: 10.1109/CVPR.2007.383265 ISBN: 978-1-4244-1180-1

## Description

La présente invention est relative au domaine du traitement d'image. Elle concerne plus particulièrement la détection et le suivi de points caractéristiques d'un visage.

### Contexte de l'invention et problèmes posés

L'identification de points caractéristiques d'un visage dans une image présente de nombreuses applications, qui couvrent notamment la sécurité ou la réalité augmentée.

Dans ce dernier domaine, on peut par exemple citer l'essayage virtuel de lunettes entièrement automatique, c'est à dire la superposition sur un écran d'une image réelle d'un visage d'un utilisateur et d'une image virtuelle d'une paire de lunettes dont des paramètres caractéristiques, tels que la forme et la texture, ont été préalablement mémorisés.

Il est alors important de pouvoir détecter les points caractéristiques d'un visage à partir d'une simple image d'un utilisateur. Ce procédé est appelé

### alignement du visage.

Parmi les méthodes d'alignement, on peut citer les méthodes par modélisation statistique. Celles-ci comportent classiquement deux phases :
- une phase d'apprentissage qui consiste à créer le modèle statistique et
- une phase de détection qui consiste à faire converger la forme et/ou la texture du modèle statistique sur une donnée réelle.

Les trois principaux algorithmes utilisant des modèles statistiques sont les **modèles à forme active** ASM (Active Shape Models), les **modèles à apparence active** AAM (Active Appearance Models) et les **modèles locaux contraints** CLM (Constrained Local Models).

Dans la phase d'apprentissage, les ASM ne modélisent que la forme (ensemble de points reliés entre eux) d'un objet, les AAM modélisent la forme et la texture (pixels contenus à l'intérieur de l'enveloppe convexe de la forme), et les CLM modélisent la forme et des patchs de textures (pixels contenus dans une zone de voisinage en chaque point de la forme).

Dans la phase de détection, les ASM comme les CLM font converger la forme de l'objet en fonction de surfaces de réponse (qui sont unidimensionnelles pour les ASM et bidimensionnelles pour les CLM), la texture du modèle statistique CLM est statique ou bien mise à jour par prédictions. Tandis que pour les AAM, la convergence se fait conjointement sur la texture et la forme (avec des méthodes de descente de gradient), la texture du modèle cherche à approximer au mieux la texture de l'image sur laquelle se déroule la détection.

Les CLM ont l'avantage d'être plus robustes aux occultations et aux changements d'apparence, mais sont plus sensibles aux minima locaux. Les AAM sont plus robustes face aux minima locaux, mais la convergence de la texture est problématique dans les méthodes de descente de gradient (problème de triangulation de la forme dont la fonction de déformation du maillage doit toujours créer un maillage uni), et les AAM s'adaptent moins à la variabilité des visages.

Les documents suivants présentent d'autres méthodes de détection des points caractéristiques d'une visage:
Zihian Xu et al. : "A hierarchical compositional model for face représentation and sketching", 2008, ISSN: 1262-8828 ;
Zhang Li et al. : "Robust Face Alignment Based on Hierarchical Classifier Network", 2006, ISBN: 978-3-030-71592-2; et
Liang Lin et al. : "Face Alignment Via Component-Based Discriminative Search", 2008, ISBN: 978-3-540-74549-5.

Ces divers algorithmes ne sont donc pas totalement satisfaisants.

### Exposé de l'invention

La présente invention vise selon un premier aspect un procédé de détection d'un ensemble prédéfini de points caractéristiques d'un visage à partir d'une image de ce visage.

Le procédé comporte un groupe d'étapes 300-400 qui consiste à faire converger la forme et la texture d'une hiérarchie de modèles statistiques de parties de visage sur les données réelles fournies par l'image du visage.

On appelle également dans la littérature **reconstruction de visage** ce procédé de détection ou d'identification de points caractéristiques, en ce qu'il permet ensuite de reconstruire la forme tridimensionnelle et la position du visage, et donc d'y calculer si besoin diverses dimensions, par exemple dans le cadre d'essayage de paires de lunettes virtuelles.

Préférentiellement, les modèles statistiques utilisés sont de type Modèles à Apparence Active par Patchs (PAAM). Ceux-ci sont avantageusement créés à partir de mêmes données d'apprentissage (textures et formes), seuls des sous-ensembles différents de points définissant les formes étant utilisés.

Il s'agit donc d'un algorithme de reconstruction de visage, nommé dans la suite de la description Hiérarchie de Modèles à Apparence Active par Patchs (en anglais "Hierarchical Patches Active Appearance Models" ou HPAAM).

Le procédé comporte l'utilisation d'une hiérarchie de modèles statistiques de parties de visage (HPAAM) pour la détection de points caractérisant de visages simplifiés ou de parties de visage (comme par exemple les yeux et la bouche) (étape 300) puis d'une hiérarchie de modèles statistiques de visage pour la détection finale (étape 400).

Préférentiellement, le groupe d'étapes 300-400 utilise une méthode d'alignement par modélisation comportant deux phases :
- une phase d'apprentissage qui consiste à créer un modèle statistique et
- une phase de détection qui consiste à faire converger la forme et/ou la texture du modèle statistique sur une donnée réelle.

Selon une mise en oeuvre préférée, la construction d'un modèle statistique de forme et de texture est réalisée en alignant et en normalisant toutes les formes et les textures puis en appliquant une analyse en composante principale sur les formes alignées et sur les textures alignées.

Le procédé de détection utilise, dans un cas particulier, une étape de minimisation par un algorithme inverse compositionnel (ICA) pour la reconstruction du visage en faisant converger des paramètres de forme p, de pose *q*, et de texture *λ* de chaque modèle statistique de partie de visage.

Dans cette phase de détection utilisant une approche de type Gauss Newton via l'algorithme ICA, la texture, la forme et la pose du modèle PAAM sont optimisées de sorte que la texture de chacun des patchs converge vers la texture de l'image utilisée pour la détection.

Le modèle hiérarchique est un ensemble composé d'un modèle statistique de parties du visage (MSV1), et d'un modèle statistique du visage (MSV2).

Selon diverses mises en oeuvre éventuellement utilisées conjointement :
- le procédé comporte une étape 100 de prétraitement de l'image afin de s'affranchir au mieux des conditions d'éclairage de la prise de vue, ce prétraitement comportant une égalisation d'histogramme.
- le procédé comporte une étape 200 de détection du visage dans l'image, réalisée grâce à un algorithme du type de celui de Viola et Jones

### Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur les figures annexées qui représentent :
Figure 1 : un organigramme du procédé tel que décrit ici
Figure 2 : un exemple de modèle statistique de visage.

### Description détaillée d'un mode de réalisation de l'invention

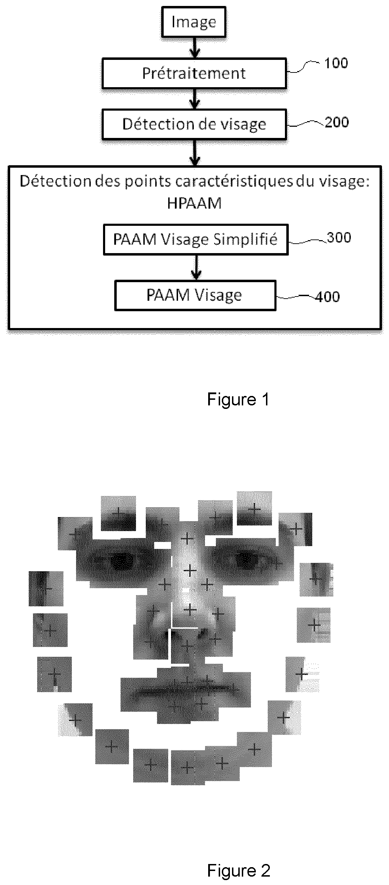

Dans le cadre de l'exemple décrit ici, le procédé selon l'invention (illustré figure 1) est destiné à être mis en oeuvre sous forme logicielle, par exemple par un micro-ordinateur du marché; connu en soi.

Le procédé travaille sur des données d'entrée représentatives d'une image du visage d'un individu.

Le procédé et le dispositif d'acquisition de l'image du visage sortent en tant que tels du cadre de la présente invention et ne sont donc pas détaillés plus avant ici.

### Mode de fonctionnement

L'algorithme de la solution d'alignement de visage proposée comporte en quatre étapes :
Etape 100 : Prétraitement de l'image afin de s'affranchir au mieux des conditions d'éclairage de la prise de vue. Le prétraitement de l'image utilisé est une égalisation d'histogramme
Etape 200 : Détection du visage dans l'image. La détection de visage est réalisé grâce à un algorithme connu en soi, du type de celui de Viola et Jones
Etape 300 : Détection de parties du visage (comme par exemple les yeux et la bouche) dans la zone du visage détectée à l'étape 200 précédente. La détection de parties du visage consiste à faire converger un modèle statistique de visage simplifié (MSV1) de type modèle à apparence active par patchs (noté PAAM par simplification).

Il est à noter que cette étape 300 peut contenir des sous-étapes intermédiaires qui ne sont pas indispensables, mais qui rendent la reconstruction (c'est-à-dire la détection des points caractéristiques du visage, permettant de le reconstituer sous n'importe quel angle) plus robuste. Cela consiste à faire converger en chaque sous-étape un modèle statistique de type PAAM de plus en plus riche ou complexe en nombre de points et/ou en taille de patchs. La dernière sous-étape étant la convergence du modèle statistique de visage simplifié le plus complexe.

Le but de chaque sous étape est de faire converger un algorithme de type ICA (algorithme inverse compositionnel), connu en soi, sur un modèle statistique avant un autre modèle statistique plus complexe.

Cet algorithme ICA, permet de trouver de manière itérative les paramètres de forme (p), de pose (q) et de texture (λ) qui correspondent au mieux à l'image traitée.

En effet, ceci permet, notamment d'améliorer l'estimation du paramètre de pose q, qui est assez imprécise en utilisant la détection du visage de Viola et Jones.

Il est à noter également que, dans une variante de mise en oeuvre, une initialisation plus complexe des modèles PAAM peut être envisagée. Plusieurs instances ou initialisations du modèle statistique PAAM (du visage simplifié MSV1 ou d'une sous-étape) peuvent par exemple être initiées à l'intérieur de la zone du visage trouvé à l'étape 200. Les points des parties du visage détectés seront alors ceux donnés par la meilleure instance en termes de corrélation ou d'erreur de convergence.

Etape 400 : Détection des points caractéristiques du visage. La détection des points caractéristiques du visage consiste à faire converger un modèle statistique de visage (MSV2) de type PAAM. La figure 2 illustre un exemple de modèle statistique de visage.

Les modèles statistiques MSV1 et MSV2 sont créés à partir de la même base d'apprentissage, il existe alors des facteurs multiplicatifs permettant de faire correspondre des paramètres régissant les formes correspondant aux modèles statistiques MSV1 et MSV2. Par exemple, le paramètre modifiant la forme d'un mouvement de gauche à droite du visage pour le modèle statistique MSV1 est -1 fois celui du modèle statistique MSV2.

L'initialisation de l'étape 400 se faire à l'aide de ces facteurs multiplicatifs appliqués aux paramètres trouvés à l'étape 300. Les autres paramètres ne trouvant pas de correspondance peuvent être instanciés en plusieurs positions (-0.5, 0 et 0.5 par exemple), seule la convergence donnant l'erreur la plus petite. Des tests ont montré qu'il était préférable de considérer l'erreur donnée par la corrélation de la texture du modèle et de la texture de l'image (ZNCC) au lieu de la différence au carré de ces textures (SSD).

Le paramètre de pose (q) est initialisé grâce à l'étape 300
Il est à noter que cette étape 400 peut contenir aussi des sous-étapes intermédiaires qui ne sont pas indispensables, mais qui rendent la reconstruction plus robuste. Cela consiste à faire converger en chaque sous-étape un modèle statistique de visage type PAAM de plus en plus complexe en termes de taille de patchs ou de résolution. La dernière sous-étape étant la convergence du modèle statistique de visage le plus complexe.

Il est à noter également que les paramètres d'initialisation des sous-étapes peuvent être déduits de la sous étape précédente grâce au fait que les modèles statistiques de visages peuvent être créés à partir de la même base d'apprentissage.

En ce qui concerne les modèles statistiques PAAM (utilisés dans les étapes 300 et 400), la méthode d'alignement par modélisation statistique comporte deux phases :
- une phase d'apprentissage qui consiste à créer le modèle statistique et
- une phase de détection qui consiste à faire converger la forme et/ou la texture du modèle statistique sur une donnée réelle.

La phase d'apprentissage du modèle statistique PAAM par patchs à apparence active (Patches Active Appearance Models), proposé dans le présent exemple de mise en oeuvre de l'invention, diffère d'un algorithme de modèles locaux contraints CLM sur le fait qu'une texture est maintenant apprise et sur a manière d'effectuer l'alignement des données.

La phase de détection du modèle PAAM se fait de façon similaire aux AAM. On utilise une minimisation de Gauss Newton conjointement sur la texture, la forme et la pose du modèle, de sorte que la texture de chacun des patchs converge vers la texture de l'image utilisée pour la détection. Une différence très significative provient de la manière de modifier la forme (la manière d'implémenter les fonctions de déformation ou fonctions 'Warp'). En effet, les méthodes de convergence des AAM font appel à la composition de fonctions de déformation de maillage. Mais dans le cas de maillages, la composition en chaque triangle fait perdre la connexité du maillage. Un maillage étant un ensemble de points reliés par triangulation.

L'avantage de cette approche PAAM est que la résolution de la minimisation ne nécessite pas d'approximation due aux fonctions de déformations (ou 'Warp') puisqu'il n'y a plus de notion de connexité de maillage et que l'on peut formaliser la solution problème de façon matricielle.

Dans une mise en oeuvre préférée, on utilise dans le présent procédé d'alignement du visage un modèle hiérarchique (noté HPAAM par simplification dans la suite de la description) qui est la composition de modèles statistiques PAAM, ces modèles pouvant être créés à partir des mêmes données d'apprentissage (textures et formes).

Un **modèle hiérarchique** est défini comme la composition de modèles statistiques lorsque ces modèles statistiques sont créés à partir des mêmes données d'apprentissage (textures et formes). Seuls des sous-ensembles différents de points définissant les formes sont utilisés.

On l'appelle hiérarchique parce que la définition (en nombre de points) et donc le contenu sémantique des modèles impliqués va progressivement croissante.

La construction d'un modèle statistique de forme et de texture est, quant à lui, réalisé en alignant et en normalisant toutes les formes et les textures puis en appliquant une **analyse en composante principale** (notée par simplification ACP dans la suite de la description) sur les formes alignées et sur les textures alignées. Des algorithmes d'analyse en composante principale sont bien connus de l'homme du métier et ne sont donc pas détaillés ici.

Les formes (S) sont alors paramétrées de la façon suivante : *S* = *S̅* + Φ*_{S}*b*_{S},* dans lequel S désigne la forme moyenne et b_{S} les vecteurs propres donnés par l'analyse en composante principale. De façon similaire, pour les textures : *T* = *T̅* + Φ*_{T}*b*_{T}*

Les modèles statistiques présentés sont, dans le présent exemple, créés à partir d'une centaine de textures et formes de visages.

Une texture est la concaténation de patchs rectangulaires centrés sur chaque point de la forme.

Le modèle hiérarchique proposé est un ensemble composé d'un modèle statistique de parties visage (MSV1) et d'un modèle statistique du visage (MSV2).

On effectue alors un alignement des formes par une analyse de Procruste, selon une méthode connue en soi.

La forme du modèle statistique du visage MSV2 est, dans le présent exemple de mise en oeuvre, constituée de cinquante et un points. Il est cependant clair que des modèles utilisant des nombres de points plus ou moins grands sont utilisables.

Ici encore, on effectue un alignement des formes par une analyse de Procruste, selon une méthode connue en soi. La texture est la concaténation des 51 patchs rectangulaires
Dans la solution d'alignement de visage présentée ici à titre d'exemple nullement limitatif, on utilise un HPAAM pour la détection des parties de visage (étape 300) puis un HPAAM pour le visage pour la détection finale (étape 400).

Un modèle statistique PAAM utilise deux paramètres normalisés à estimer : un premier paramètre *p* définissant la forme et un second paramètre *λ* définissant la texture. Pour la variabilité en pose des visages dans l'image (rotation, homothétie, translation) un troisième paramètre *q* (paramètre de pose) est à estimer.

Pour la partie HPAAM des parties de visage (étape 300), les paramètres p et λ du modèle statistique PAAM MSV1 sont initialisés à 0, tandis que le paramètre de pose q est estimé grâce à la détection du visage.

De la même façon, dans le cas ou des sous-étapes intermédiaires sont utilisées, les paramètres p et λ des modèles statistiques PAAM suivants (modèles plus complexes) sont initialisés à 0.

Il est à noter que dans une réalisation non privilégiée car moins robuste, l'étape 300 de convergence d'un modèle statistique PAAM de visage simplifié MSV1 peut être supprimée. Dans ce cas, plusieurs instances ou initialisations du paramètre de forme de l'étape 400 sont alors initiées. Les points du visage détectés seront alors ceux donnés par meilleure instance en termes de corrélation ou d'erreur de convergence.

Le paramètre λ de texture est quant à lui initialisé à 0 puisque les textures des deux étages (correspondant aux deux niveaux de résolution) ne sont pas liées. Enfin, le paramètre de pose q peut être directement repris de l'étage PAAM précédent.

La présente invention vise selon un second aspect un procédé de suivi d'un ensemble prédéfini de points caractéristiques d'un visage dans une vidéo. En effet, le procédé d'alignement de visage décrit précédemment permet de détecter des points caractéristiques d'un visage se trouvant dans la première image composant une vidéo. Cette étape permet notamment de trouver les paramètres de pose, de texture et de forme expliquant le visage détecté. Pour les images suivantes qui composent la vidéo, une telle détection n'est pas nécessaire puisqu'il s'agit toujours de la même identité et les variations de forme et de pose entre 2 images consécutives sont minimes. Le suivi consiste donc à faire converger un modèle statistique de visage (MSV2) de type PAAM successivement pour chaque image. Les paramètres étant simplement initialisés grâce aux paramètres trouvés pour l'image précédente.

Pour chaque point associé au patch, il est possible d'établir des mises en correspondances directes entre les images, et ainsi de permettre la reconstruction 3D éparse du modèle de visage ainsi que son suivi 3D au long de la séquence vidéo selon des techniques classiques d'ajustement de faisceau connues de l'homme du métier.

### Avantages de réalisation

Un algorithme d'alignement de visage HPAAM permet de détecter les points caractéristiques d'un visage en s'affranchissant le plus possible des conditions de prises de vues de l'image (induites par le système d'acquisition ou par l'illumination de la scène) et des variations propres au visage (identité, pose, expression).

Il est à noter que le choix d'un modèle déformable par patch a pour avantage de créer moins de dépendances à l'illumination, moins de dépendances aux expressions du visage, et d'éviter le problème de connectivité du maillage par rapport à un modèle déformable complet.

La reconstruction par patch proposée a montré son efficacité sur des bases de données de visages contenant une grande variabilité en identités, poses et illuminations.

### Variantes de réalisation

La portée de la présente invention ne se limite pas aux détails des formes de réalisation ci-dessus considérées à titre d'exemple, mais s'étend au contraire aux modifications à la portée de l'homme de l'art. L'étendue de la protection est fournie par les revendications ci-jointes.

## Revendications

1. Procédé de détection d'un ensemble prédéfini de points caractéristiques d'un visage à partir d'une image de ce visage,
dans lequel les points caractéristiques sont obtenus en faisant converger la forme et la texture d'une hiérarchie de modèles statistiques de parties de visage, MSV1, et d'une hiérarchie de modèles statistiques de visage, MSV2, sur les données réelles fournies par l'image du visage, les modèles statistiques utilisés étant de type Modèles à Apparence Active par Patchs, PAAM,
**caractérisé en ce qu'**il comporte l'utilisation de la hiérarchie de modèles statistiques de parties de visage, MSV1, pour la détection de parties de visage dans la zone du visage dans l'image (étape 300), puis l'utilisation de la hiérarchie de modèles statistiques de visage, MSV2, pour la détection finale (étape 400) dans lequel les hiérarchies de modèles statistiques MSV1 et MSV2 sont créés à partir d'une même base d'apprentissage, des facteurs multiplicatifs faisant correspondre des paramètres régissant les formes correspondant aux hiérarchies de modèles statistiques MSV1 et MSV2, l'initialisation de la détection finale étant effectuée à l'aide desdits facteurs multiplicatifs appliquées aux paramètres trouvés en la détection des parties du visage dans la zone du visage dans l'image.

2. Procédé selon la revendication 1, **caractérisé en ce que** la détection finale comprend une pluralité de sous-étapes intermédiaires, un modèle statistique de visage de plus en plus complexe en termes de taille de patchs ou de résolution convergeant à chaque sous-étape.

3. Procédé selon la revendication 2, **caractérisé en ce qu'**une erreur donnée par la corrélation de la texture du modèle et de la texture de l'image est considérée pour la convergence de la hiérarchie de modèles statistiques de visage pour la détection finale.

4. Procédé selon l'une quelconque des revendications précédentes, **caractérisé en ce que** la détection de parties de visage comprend une pluralité de sous-étapes intermédiaires, un modèle statistique de type PAAM de plus en plus riche en nombre de points et/ou en taille de patchs convergeant à chaque sous-étape.

5. Procédé selon la revendication 4, **caractérisé en ce qu'**un algorithme inverse compositionnel, ICA, est utilisé pour la convergence du modèle statistique au cours de chaque sous-étape de la détection de parties de visage.

6. Procédé selon l'une quelconque des revendications précédentes, **caractérisé en ce que** la détection de parties de visage et la détection finale utilisent une méthode d'alignement par modélisation comportant deux phases :
- une phase d'apprentissage qui consiste à créer un modèle statistique et
- une phase de détection qui consiste à faire converger la forme et/ou la texture du modèle statistique sur une donnée réelle.

7. Procédé selon la revendication 6, **caractérisé en ce que** la construction d'un modèle statistique de forme et de texture est réalisée en alignant et en normalisant toutes les formes et les textures puis en appliquant une analyse en composante principale sur les formes alignées et sur les textures alignées.

8. Procédé selon l'une quelconque des revendications précédentes, **caractérisé en ce que** les modèles statistiques sont créés à partir de mêmes données d'apprentissage, seuls des sous-ensembles différents de points définissant les formes étant utilisés.

9. Procédé selon l'une quelconque des revendications précédentes, **caractérisé en ce qu'**il comporte une étape de minimisation par un algorithme inverse compositionnel, ICA, pour la détection de points caractéristiques du visage en faisant converger des paramètres de forme p, de pose q et de texture *λ* de chaque modèle statistique de partie de visage.

10. Procédé selon l'une quelconque des revendications 6 à 8, **caractérisé en ce que** dans la phase de détection du modèle PAAM, on utilise une minimisation de Gauss Newton conjointement sur la texture, la forme et la pose du modèle, de sorte que la texture de chacun des patchs converge vers la texture de l'image utilisée pour la détection.

11. Procédé selon l'une quelconque des revendications précédentes, **caractérisé en ce qu'**il comporte une prétraitement de l'image afin de s'affranchir au mieux des conditions d'éclairage de la prise de vue, ce prétraitement comportant une égalisation d'histogramme.

12. Procédé selon l'une quelconque des revendications précédentes, **caractérisé en ce qu'**il comporte une détection du visage dans l'image, réalisée grâce à un algorithme du type de celui de Viola et Jones

13. Procédé de suivi d'un ensemble prédéfini de points caractéristiques d'un visage dans une vidéo,
**caractérisé en ce que** ledit procédé comporte une détection de points caractéristiques du visage pour la première image composant la vidéo, et qui consiste à faire converger la forme et la texture d'un modèle statistique de parties de visage sur les données réelles fournies par les images suivantes composant la vidéo, le modèle statistique utilisé étant de type Modèle à Apparence Active par Patchs, PAAM,
ledit procédé de suivi mettant en oeuvre le procédé de détection d'un ensemble prédéfini de points selon l'une quelconque des revendications 1 à 12.

## Patentansprüche

1. Verfahren zum Erkennen einer vordefinierten Menge charakteristischer Punkte eines Gesichts auf Grundlage eines Bildes dieses Gesichts,
wobei die charakteristischen Punkte durch Konvergieren der Form und der Textur einer Hierarchie statistischer Modelle von Gesichtsteilen, MSV1, und einer Hierarchie statistischer Modelle von Gesichtern, MSV2, auf die realen Daten, die vom Bild des Gesichts geliefert werden, erhalten werden, wobei die verwendeten statistischen Modelle vom Typ Patch-based Active Appearance Models, PAAM, sind,
**dadurch gekennzeichnet, dass** es das Verwenden der Hierarchie statistischer Modelle von Gesichtsteilen, MSV1, für das Erkennen von Gesichtsteilen im Bereich des Gesichts im Bild (Schritt 300) und anschließend das Verwenden der Hierarchie statistischer Modelle von Gesichtern, MSV2, für das endgültige Erkennen (Schritt 400) umfasst, wobei die Hierarchien statistischer Modelle MSV1 und MSV2 auf Grundlage derselben Trainingsdatenbank der Multiplikationsfaktoren erzeugt werden, die Parameter, welche über die Formen herrschen, die den Hierarchien statistischer Modelle MSV1 und MSV2 entsprechen, in Entsprechung bringen, wobei das Initialisieren des endgültigen Erkennens mithilfe der Multiplikationsfaktoren erfolgt, die auf die Parameter angewendet werden, welche beim Erkennen der Teile des Gesichts im Bereich des Gesichts im Bild gefunden wurden.

2. Verfahren nach Anspruch 1, **dadurch gekennzeichnet, dass** das endgültige Erkennen eine Vielzahl von Zwischenteilschritten umfasst, wobei bei jedem Teilschritt ein statistisches Modell von Gesichtern, das im Hinblick auf Patch-Größe oder Auflösung immer komplexer wird, konvergiert.

3. Verfahren nach Anspruch 2, **dadurch gekennzeichnet, dass** ein Fehler, der durch das Korrelieren der Textur des Modells und der Textur des Bildes gegeben ist, beim Konvergieren der Hierarchie statistischer Modelle von Gesichtern für das abschließende Erkennen berücksichtigt wird.

4. Verfahren nach einem der vorstehenden Ansprüche, **dadurch gekennzeichnet, dass** das Erkennen von Gesichtsteilen eine Vielzahl von Zwischenteilschritten umfasst, wobei bei jedem Teilschritt ein statistisches Modell vom Typ PAAM, das im Hinblick auf Punktanzahl und/oder Patch-Größe immer reichhaltiger wird, konvergiert.

5. Verfahren nach Anspruch 4, **dadurch gekennzeichnet, dass** im Verlauf jedes Teilschritts des Erkennens von Gesichtsteilen ein Inverse Compositional Algorithm, ICA, für das Konvergieren des statistischen Modells verwendet wird.

6. Verfahren nach einem der vorstehenden Ansprüche, **dadurch gekennzeichnet, dass** das Erkennen von Gesichtsteilen und das endgültige Erkennen ein modellierungsbasiertes Ausrichtverfahren verwenden, das zwei Phasen umfasst:
- eine Trainingsphase, die darin besteht, ein statistisches Modell zu erzeugen, und
- eine Erkennungsphase, die darin besteht, die Form und/oder die Textur des statistischen Modells auf reale Daten zu konvergieren.

7. Verfahren nach Anspruch 6, **dadurch gekennzeichnet, dass** das Konstruieren eines statistischen Modells der Form und der Textur durch Ausrichten und durch Normalisieren aller Formen und Texturen und durch anschließendes Anwenden einer Hauptkomponentenanalyse auf die ausgerichteten Formen und die ausgerichteten Texturen erfolgt.

8. Verfahren nach einem der vorstehenden Ansprüche, **dadurch gekennzeichnet, dass** die statistischen Modelle auf Grundlage derselben Trainingsdaten erzeugt werden, wobei nur unterschiedliche Teilmengen von Punkten, die die Formen definieren, verwendet werden.

9. Verfahren nach einem der vorstehenden Ansprüche, **dadurch gekennzeichnet, dass** es einen Schritt des Minimierens durch einen Inverse Compositional Algorithm, ICA, für das Erkennen von charakteristischen Punkten des Gesichts durch Konvergieren der Form-, *p*, Lage-, *q*, und Textur-, A, Parameter jedes statistischen Modells von Gesichtsteilen umfasst.

10. Verfahren nach einem der Ansprüche 6 bis 8, **dadurch gekennzeichnet, dass** in der Erkennungsphase des PAAM-Modells eine Gauß-Newton-Minimierung gemeinschaftlich auf die Textur, die Form und die Lage des Modells verwendet wird, sodass die Textur jedes der Patches zur Textur des Bildes, das für das Erkennen verwendet wird, konvergiert.

11. Verfahren nach einem der vorstehenden Ansprüche, **dadurch gekennzeichnet, dass** es ein Vorverarbeiten des Bildes umfasst, um sich bestmöglich von den Beleuchtungsbedingungen der Aufnahme freizumachen, wobei dieses Vorverarbeiten eine Histogrammentzerrung umfasst.

12. Verfahren nach einem der vorstehenden Ansprüche, **dadurch gekennzeichnet, dass** es ein Erkennen des Gesichts im Bild umfasst, das dank eines Algorithmus vom Typ desjenigen von Viola und Jones erfolgt.

13. Verfahren zum Verfolgen einer vordefinierten Menge charakteristischer Punkte eines Gesichts in einem Video,
**dadurch gekennzeichnet, dass** das Verfahren ein Erkennen von charakteristischen Punkten des Gesichts beim ersten Bild, aus dem das Video besteht, umfasst, und das darin besteht, die Form und die Textur eines statistischen Modells von Gesichtsteilen auf die realen Daten, die von den folgenden Bildern, aus denen das Video besteht, geliefert werden, zu konvergieren, wobei das verwendete statistische Modell vom Typ Patch-based Active Appearance Model, PAAM, ist,
wobei das Verfolgungsverfahren das Verfahren zum Erkennen einer vordefinierten Menge von Punkten nach einem der Ansprüche 1 bis 12 einsetzt.

## Claims

1. A method for detecting a predefined set of characteristic points of a face from an image of this face, wherein the characteristic points are obtained by making the shape and the texture of a hierarchy of face portion statistical models, MSV1, and a hierarchy of face statistical models, MSV2, converge on the real data supplied by the image of the face, the used statistical models being of the Patch-based Active Appearance Model type, PAAM,
**characterised in that** it includes using the hierarchy of face portion statistical models, MSV1, for the detection of face portions in the area of the face in the image (step 300), then using the hierarchy of face statistical models, MSV2, for the final detection (step 400) wherein the hierarches of statistical models MSV1 and MSV2 are created based on the same learning base, multiplicative factors matching parameters governing the shapes corresponding to the hierarchies of statistical models MSV1 and MSV2, the initialisation of the final detection being performed using said multiplicative factors applied to the parameters found upon detection of the portions of the face in the area of the face in the image.

2. The method according to claim 1, **characterised in that** the final detection comprises a plurality of intermediate sub-steps, a face statistical model increasingly complex in terms of patch size or of resolution converging at each sub-step.

3. The method according to claim 2, **characterised in that** an error given by the correlation of the texture of the model and of the texture of the image is considered for the convergence of the hierarchy of face statistical models for the final detection.

4. The method according to any one of the preceding claims, **characterised in that** the face portion detection comprises a plurality of intermediate sub-steps, a PAAM-type statistical model increasingly rich in terms of number of points and/or of patch size converging at each sub-step.

5. The method according to claim 4, **characterised in that** an inverse compositional algorithm, ICA, is used for the convergence of the statistical model at each sub-step of the face portion detection.

6. The method according to any one of the preceding claims, **characterised in that** the face portion detection and the final detection use a modelling alignment method, including two phases:
- a learning phase, which consists in creating the statistical model, and
- a detection phase, which consists in making the shape and/or the texture of the statistical model converge on a real piece of data.

7. The method according to the claim 6, **characterised in that** the construction of a shape and texture statistical model is done by aligning and by normalising all of the shapes and textures, then by applying a main component analysis on the aligned shapes and on the aligned textures.

8. The method according to any one of the preceding claims, **characterised in that** the statistical models are created based on the same learning data, only different sub-sets of points defining the shapes being used.

9. The method according to any one of the preceding claims, **characterised in that** it includes a step of minimisation by an inverse compositional algorithm, ICA, for the detection of characteristic points of the face by making the shape p, posture q and texture λ parameters of each face portion statistical model converge.

10. The method according to any one of claims 6 to 8, **characterised in that** in the detection phase of the PAAM model, a Gauss Newton minimisation is used, jointly on the texture, the shape and the posture of the model, so that the texture of each of the patches converge towards the texture of the images used for the detection.

11. The method according to any one of the preceding claims, **characterised in that** it includes pre-processing the image, in order to best overcome the lighting conditions of the shot, this pre-processing including a histogram equalisation.

12. The method according to any one of the preceding claims, **characterised in that** it includes detecting the face in the image, carried out using a Viola and Jones type algorithm.

13. A method for monitoring a predefined set of characteristic points of a face in a video,
**characterised in that** said method includes detecting characteristic points of the face for a first image composing the video, and which consists in making the shape and the texture of a face portion statistical model converge on the real data supplied by the next images composing the video, the used statistical model being of the Patch-based Active Appearance Model type, PAAM,
said monitoring method implementing the method for detecting a predefined set of points according to any one of claims 1 to 12.
